# EUROPEAN PATENT SPECIFICATION

(11) **EP 4 588 367 B1**
(45) Date of publication and mention of the grant of the patent: **22.04.2026**
(21) Application number: 25150750.5
(22) Date of filing: 08.01.2025
(51) Int. Cl.: A23P 30/20

(54) **MACHINE FOR EXTRUSION OF FOODSTUFF MATERIAL**
MASCHINE ZUM EXTRUDIEREN VON NAHRUNGSMITTELN
MACHINE POUR L'EXTRUSION DE PRODUITS ALIMENTAIRES

(30) Priority: 18.01.2024 IT 202400000888
(43) Date of publication of application: 23.07.2025
(73) Proprietor: Selmi S.r.l., 12042 BRA (CN) (IT)
(72) Inventor: SELMI, Paolo, I-12042 BRA (CN) (IT)
(74) Representative: Buzzi, Notaro & Antonielli d'Oulx S.p.A.

(56) References cited:
- WO-A1-2022/144142
- WO-A2-2007/101746
- US-A- 4 938 127

## Description

The present invention relates to a machine for extrusion of foodstuff material, of the type comprising:
- a housing having inside it a chamber configured to receive foodstuff material;
- at least one outlet, set in communication with said chamber, for dispensing the extruded foodstuff material; and
- at least one extruding implement set within said chamber.

US4938127A discloses prior art of possible interest as technical background.

The object of the present invention is to providing a machine of the type referred to above that is versatile and, in particular, suited for processing types of foodstuff material that are markedly different from one another, and that, at the same time, is characterized by a relatively simple, sturdy, and compact structure.

The aforesaid object is achieved via a machine according to claim 1.

The claims form an integral part of the teaching provided herein.

Further characteristics and advantages of the present invention will emerge clearly from the ensuing description with reference to the annexed drawings, which are provided purely by way of non-limiting example and in which:
- Figure 1 represents the machine described herein according to a preferred embodiment, in a partially exploded view;

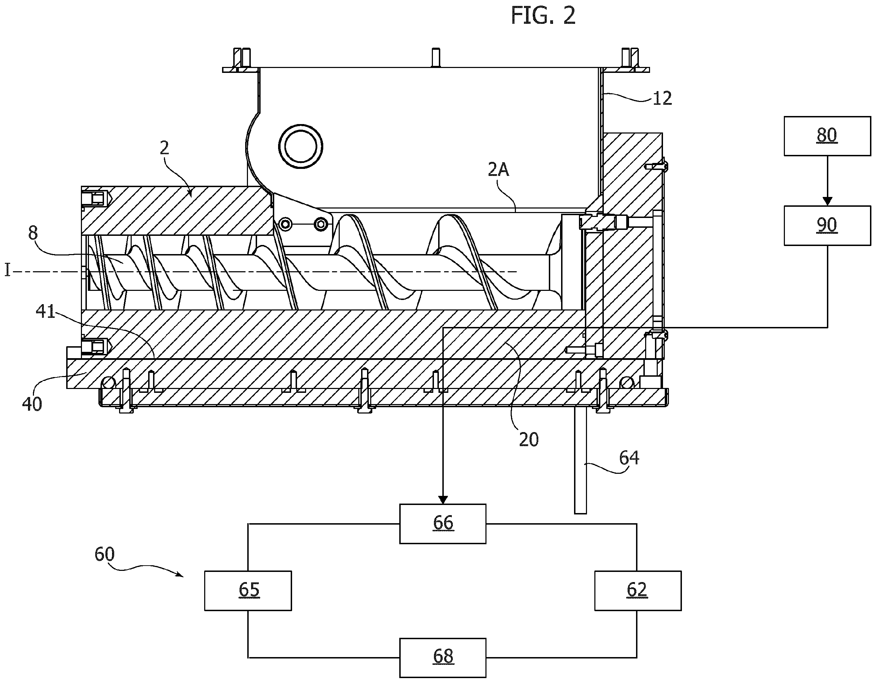

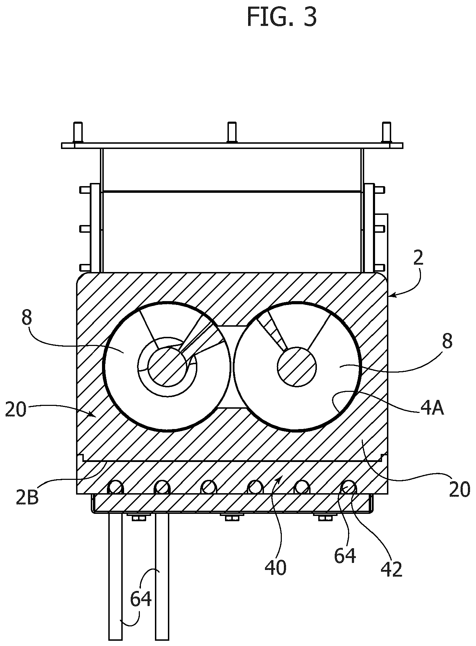

- Figure 2 is a cross-sectional view according to the plane III-III of Figure 1;

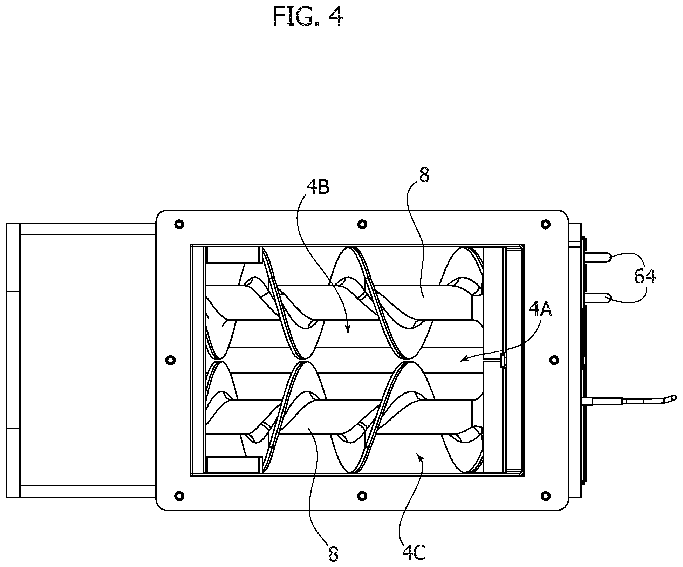

- Figure 4 is a top plan view of the machine of Figure 1; and
- Figure 5 is a plan view from beneath of the machine of Figure 1.

In the ensuing description various specific details are illustrated aimed at enabling an in-depth understanding of the embodiments. The embodiments may be obtained without one or more of the specific details, or with other methods, components, materials, etc. In other cases, known structures, materials, or operations are not illustrated or described in detail so that various aspects of the embodiment will not be obscured.

The references used herein are only provided for convenience and hence do not define the sphere of protection or the scope of the embodiments.

With reference to the figures, the machine described herein - designated as a whole by the reference number 10 - is a machine for extrusion of foodstuff material. Preferred applications of the machine described herein regard foodstuff materials of the confectionery industry, comprising, for example, chocolate, surrogates, animal and vegetable proteins, inclusions such as dry fruits (walnuts, hazelnuts, almonds, pistachios, cashews, etc.), fruit, dried fruit, dry and non-dry fruit pastes (which are tempered and then extruded), dry-fruit pastes such as almond paste, mixtures with fruit and sugar syrup, mixtures containing cereals, also puffed or worked, etc. Such materials may be used individually or in mixtures.

Other applications may instead regard:
- the production of products of the dairy-product sector, such as cheese, including vegan cheese, and derivatives;
- the cosmetics sector, for example in relation to the production of cocoa butter, and sticks of cosmetic of various shapes and compositions;

- the bakery sector, for example in relation to the production of almond-paste-based products, cornmeal-paste-based products, etc.;
- the pasta sector, for example for the production of fresh pasta; and
- the sector of meat or corresponding compounds and surrogates, including vegetable-based ones.

In general, the machine 10 comprises:
- a housing 2 having inside it a chamber 4 configured to receive foodstuff material;
- at least one outlet 6, set in communication with the chamber 4, for dispensing the extruded foodstuff material; and
- at least one extruding implement 8 set within the chamber 4.

In the example illustrated, arranged within the chamber 4 are two extruder implements 8, which are mounted rotatable about two parallel and horizontal axes of rotation I. In a way in itself known, the two extruder implements 8 are shaped like an auger, preferably with a variable screw pitch so as to feed the foodstuff material along the axis of rotation and at the same time compress it in the same direction.

The chamber 4 is delimited by an inner surface 4A that surrounds the two extruder implements 8 so as to remain adherent, i.e., close, to the peripheral portion of the implements themselves.

In this connection, in one or more preferred embodiments like the one illustrated, the inner surface 4A has two distinct concave portions 4B, 4C, each of which is set immediately adjacent to one of the two implements 8 and defines a cavity within which the respective implement is housed.

In one or more preferred embodiments like the one illustrated, a hopper 12 is mounted on the top side of the housing 2, at an opening 2A of the housing 2, through which the inside of the hopper 12 is set in communication with the chamber 4.

The housing 2 comprises a main body 20 that defines inside it at least part of the chamber 4 and a base 2B of the housing 2. Possibly, the housing 2 may be provided with further elements to complete the overall structure of the housing 2 itself and of the respective chamber 4.

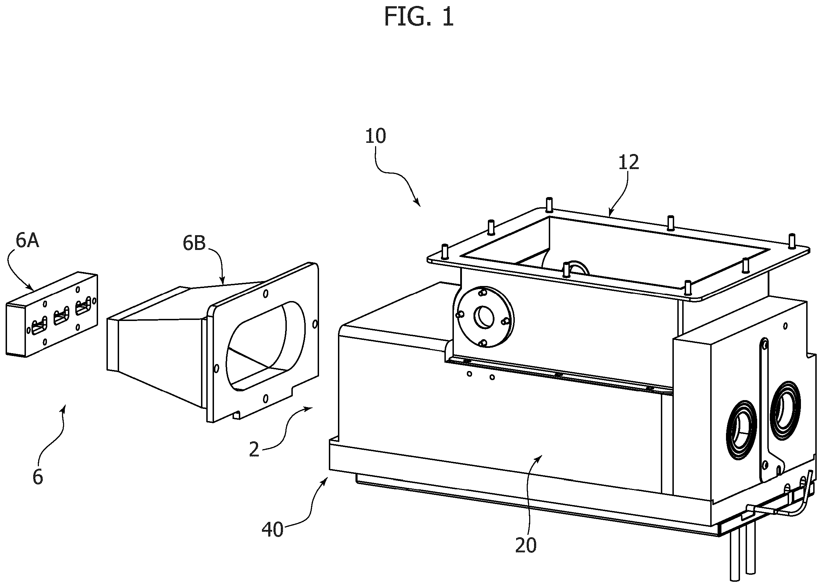

The outlet 6 may comprise a die 6A having a series of openings shaped for outlet of the foodstuff material. In one or more preferred embodiments like the one illustrated, the outlet 6 comprises a hopper duct 6B, which is fixed to the housing 2 and sets in communication the chamber 4 with the opening of the die 6A. The duct 6B has the function of compressing the material in a plane transverse to its direction of advance. The outlet 6 is illustrated only in Figure 1.

According to an important characteristic of the solution described herein, the machine 10 comprises a heat-conditioning system for selectively cooling or else heating the housing 2 so as to cool or heat the foodstuff material contained in the chamber 4.

In one or more preferred embodiments like the one illustrated, the heat-conditioning system comprises a heat-conditioning plate 40, which is set in direct contact with the base 2B of the housing 2 through a contact surface 41 thereof, so as to be in a condition of heat exchange with the base 2B, mainly by conduction.

The base 2B and the contact surface 41 are preferably planar and have substantially the same extension.

In a preferred embodiment, the heat-conditioning plate 40 is made of aluminium; alternatively, it may be obtained with other thermally conductive materials.

In one or more preferred embodiments like the one illustrated, the heat-conditioning system further comprises a heat-pump heat-conditioning circuit 60, in which a heat-conditioning fluid flows and which includes a heat-conditioning unit 62 that can operated alternatively for heating or cooling the fluid of the circuit.

In one or more preferred embodiments like the one illustrated, the circuit 60 comprises a tube 64 that is made of a thermally conductive material, for example copper and is set in direct contact with the heat-conditioning plate 40 so that the heat-conditioning fluid that flows within the tube itself can supply heat to or subtract heat from the plate 40 according to the operating mode of the heat-conditioning system.

On its own side opposite to the contact surface 41, the plate 40 has a recessed seat 42, sunk into the body of the plate, which receives the tube 64 and follows the entire development of the portion thereof that is in direct contact with the plate. In this way, the tube 64 is embedded in the plate 40, and heat exchange between the two components is thus optimized.

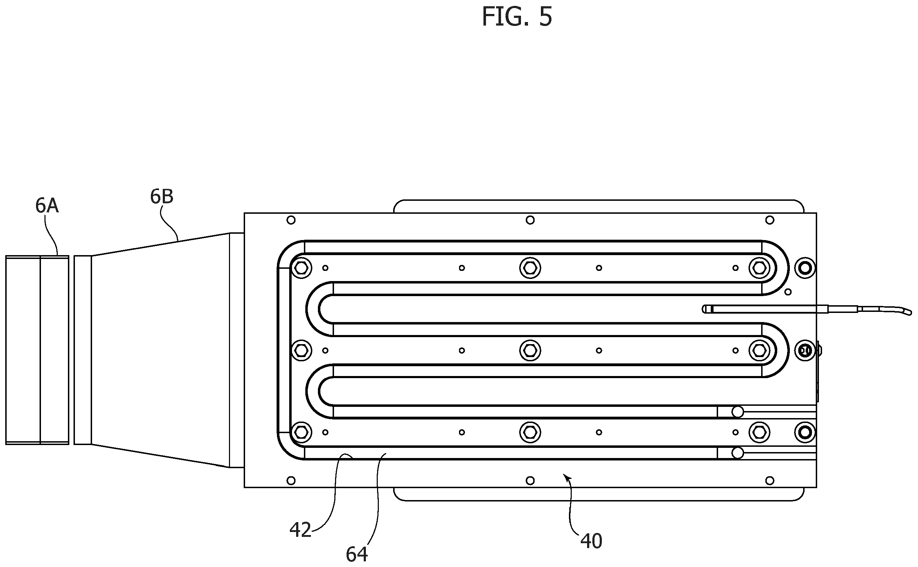

Preferably, the tube 64 follows an articulated path so as to create a grid or frame that covers a prevalent area of the plate 40 - for example, greater than 60% of the overall surface, even more preferably greater than 80% of the overall surface (with reference to the side of the plate where the seat 42 is made - see Figure 5).

In the example illustrated, the heat-pump heat-conditioning circuit 60 is represented schematically; in addition to the heat-conditioning unit 62, it comprises a second heat-conditioning unit 65, a compressor 66, and a lamination valve 68. As is in itself known for this type of systems, the conditioning unit 62 can operate alternatively as evaporator - and hence for cooling the heat-conditioning fluid of the circuit - or else as condenser - and hence for heating the heat-conditioning fluid - according to the direction of circulation of the heat-conditioning fluid within the circuit. The circuit may, for example, envisage a valve unit (not illustrated) for controlling the direction of circulation of the fluid during operation.

In a preferred embodiment, the machine 10 comprises a user interface 80 via which an operator can select a mode of operation of the heat-conditioning system (for cooling or else for heating), and a control unit 90 configured to control the heat-conditioning system according to the operating mode selected by the operator.

The machine 10 may further comprise one or more temperature sensors (not illustrated), on the basis of the detections of which the heat-conditioning system can be controlled. For instance, the control unit 90 or a different control unit of the machine 10 may be configured to control the heat-conditioning system as a function of signals coming from the temperature sensor so that the temperature detected will remain within a pre-set range. Preferably, the temperature sensor or sensors are positioned so as to detect the temperature within the chamber 4.

In view of the foregoing, the machine 10 described herein is thus able, indifferently, to heat or else cool the foodstuff material that is located within the chamber 4, and can adapt its operation according to the requirements of the specific applications. For instance, in applications on highly viscous materials, the heat-conditioning system of the machine 10 can be operated for heating the foodstuff material so as to render it more fluid and thus facilitate treatment thereof by the two extruder implements 8. Furthermore, the heat-conditioning system can be operated for heating the housing 2 during a step of washing of the chamber 4 in order to facilitate removal of any possible residue of foodstuff material from the inner surface 4A through melting of such material induced precisely by heating.

Otherwise, the heat-conditioning system can be operated for cooling the foodstuff material in applications where the foodstuff material itself needs to be kept at temperatures lower than a certain threshold to preserve its organoleptic properties or else in the cases where the action of the extruder implements 8 creates an amount of heat generated by friction that has to be removed to prevent overheating of the machine and of the material itself.

In an alternative embodiment, the heat-conditioning circuit 60 may merely be a refrigerating circuit, instead of a heat-pump circuit, so that in this case the heat-conditioning unit 62 operates only for cooling the fluid of the circuit. According to this alternative embodiment, the heat-conditioning system additionally comprises a heating unit for heating the heat-conditioning plate 40, when the heat-conditioning system is controlled for heating the housing 2. The heating unit may for example be a heating element set directly in contact with the plate 40; for instance, the plate 40 may have a recessed seat, similar to the seat 42 that receives the tube 64, in order to house the aforesaid heating element.

Of course, without prejudice to the principle of the invention, the details of construction and the embodiments may vary, even significantly, with respect to what has been illustrated herein purely by way of non-limiting example, without thereby departing from the scope of the invention, as long as the resulting embodiment is encompassed by the scope of the annexed claims.

## Claims

1. A machine (10) for extrusion of foodstuff material, comprising:
- a housing (2) having inside it a chamber (4) configured to receive foodstuff material;
- at least one outlet (6), set in communication with said chamber (4), for dispensing the extruded foodstuff material; and
- at least one extruding implement (8) set within said chamber (4);
said machine (10) comprising a heat-conditioning system for selectively cooling or else heating said housing (2) so as to cool or heat the foodstuff material contained within said chamber (4), wherein said housing (2) comprises at least one body (20), in which at least part of said chamber (4) is obtained and which defines an outer side of said housing, preferably a base (2B) of said housing, and wherein said heat-conditioning system comprises a heat-conditioning plate (40), which is coupled to said side of said housing (2) in a condition of heat exchange, mainly by conduction,
wherein said heat-conditioning plate (40) comprises a contact surface (41) set in contact with said side of said housing (2),
wherein said heat-conditioning system comprises a heat-pump heat-conditioning circuit (60), in which a heat-conditioning fluid flows and which includes a heat-conditioning unit that can be operated selectively for heating or cooling said heat-conditioning fluid, and wherein said circuit (60) comprises a tube (64) made of thermally conductive material, in which said fluid flows and which is coupled to said heat-conditioning plate (40) in a condition of heat exchange with said plate, mainly by conduction, or
said heat-conditioning system comprises a refrigerating circuit, in which a heat-conditioning fluid flows and which includes a cooling unit for cooling said heat-conditioning fluid, and wherein said circuit (60) comprises a tube (64) made of thermally conductive material, in which said fluid flows and which is coupled to said heat-conditioning plate (40) in a condition of heat exchange with said plate, mainly by conduction,
**characterized in that**, on its side opposite to said contact surface, said plate (40) has a recessed seat (42), within which said tube (64) is received and which follows the entire development of the portion of said tube (64) in contact with said plate (40).

2. The machine according to claim 1, wherein said heat-conditioning system further comprises a heating unit for heating said plate (40), preferably a heating element.

3. The machine according to any one of the preceding claims, wherein said plate (40) is made of thermally conductive material, preferably aluminium.

4. The machine according to any one of the preceding claims, wherein said housing (2) or said body (20) of said housing (2) is made of thermally conductive material, preferably aluminium.

5. The machine according to any one of the preceding claims, comprising a user interface (80) by means of which an operator can select a mode of operation of said heat-conditioning system, and a control unit (90) configured to control the heat-conditioning system according to the operating mode selected by the operator.

## Patentansprüche

1. Maschine (10) zum Extrudieren von Lebensmittelmaterial, umfassend:
- ein Gehäuse (2), das in seinem Inneren eine Kammer (4) aufweist, die zum Aufnehmen von Lebensmittelmaterial eingerichtet ist;
- mindestens eine Auslassöffnung (6), die in Verbindung mit besagter Kammer (4) gesetzt ist, zum Abgeben des extrudierten Lebensmittelmaterials; und
- mindestens ein Extrudierwerkzeug (8), das innerhalb besagter Kammer (4) angeordnet ist;
wobei besagte Maschine (10) ein Wärmekonditionierungssystem zum selektiven Kühlen oder alternativ Heizen besagten Gehäuses (2) umfasst, um das in besagter Kammer (4) enthaltene Lebensmittelmaterial zu kühlen oder zu erwärmen, wobei besagtes Gehäuse (2) mindestens einen Körper (20) umfasst, in dem mindestens ein Teil besagter Kammer (4) ausgebildet ist und der eine äußere Seite besagten Gehäuses definiert, vorzugsweise eine Basis (2B) besagten Gehäuses, und wobei besagtes Wärmekonditionierungssystem eine Wärmekonditionierungsplatte (40) umfasst, die mit besagter Seite besagten Gehäuses (2) in einem Zustand des Wärmeaustauschs, hauptsächlich durch Leitung, gekoppelt ist,
wobei besagte Wärmekonditionierungsplatte (40) eine Kontaktfläche (41) umfasst, die in Kontakt mit besagter Seite besagten Gehäuses (2) gesetzt ist,
wobei besagtes Wärmekonditionierungssystem einen Wärmekonditionierungskreis (60) mit Wärmepumpe umfasst, in dem ein Wärmekonditionierungsfluid strömt und der eine Wärmekonditionierungseinheit einschließt, die selektiv zum Heizen oder Kühlen besagten Wärmekonditionierungsfluids betätigt werden kann, und wobei besagter Kreis (60) ein Rohr (64) aus wärmeleitfähigem Material umfasst, in dem besagtes Fluid strömt und das mit besagter Wärmekonditionierungsplatte (40) in einem Zustand des Wärmeaustauschs mit besagter Platte, hauptsächlich durch Leitung, gekoppelt ist, oder
besagtes Wärmekonditionierungssystem einen Kühlkreis umfasst, in dem ein Wärmekonditionierungsfluid strömt und der eine Kühleinheit zum Kühlen besagten Wärmekonditionierungsfluids einschließt, und wobei besagter Kreis (60) ein Rohr (64) aus wärmeleitfähigem Material umfasst, in dem besagtes Fluid strömt und das mit besagter Wärmekonditionierungsplatte (40) in einem Zustand des Wärmeaustauschs mit besagter Platte, hauptsächlich durch Leitung, gekoppelt ist,
**dadurch gekennzeichnet, dass** besagte Platte (40) auf ihrer Seite gegenüber besagter Kontaktfläche einen vertieften Sitz (42) aufweist, innerhalb dessen besagtes Rohr (64) aufgenommen ist und der der gesamten Ausdehnung des Abschnitts besagten Rohrs (64) in Kontakt mit besagter Platte (40) folgt.

2. Maschine nach Anspruch 1, wobei besagtes Wärmekonditionierungssystem ferner eine Heizeinheit zum Heizen besagter Platte (40), vorzugsweise ein Heizelement, umfasst.

3. Maschine nach einem der vorhergehenden Ansprüche, wobei besagte Platte (40) aus wärmeleitfähigem Material, vorzugsweise Aluminium, hergestellt ist.

4. Maschine nach einem der vorhergehenden Ansprüche, wobei besagtes Gehäuse (2) oder besagter Körper (20) besagten Gehäuses (2) aus wärmeleitfähigem Material, vorzugsweise Aluminium, hergestellt ist.

5. Maschine nach einem der vorhergehenden Ansprüche, umfassend eine Benutzerschnittstelle (80), mittels der ein Bediener einen Betriebsmodus besagten Wärmekonditionierungssystems auswählen kann, und eine Steuereinheit (90), die zum Steuern des Wärmekonditionierungssystems gemäß dem vom Bediener ausgewählten Betriebsmodus eingerichtet ist.

## Revendications

1. Machine (10) pour l'extrusion de matière alimentaire, comprenant :
- un boîtier (2) ayant à l'intérieur une chambre (4) configurée pour recevoir la matière alimentaire ;
- au moins une sortie (6), mise en communication avec ladite chambre (4), pour distribuer la matière alimentaire extrudée ; et
- au moins un organe d'extrusion (8) placé dans ladite chambre (4) ;
ladite machine (10) comprenant un système de conditionnement thermique pour refroidir sélectivement ou bien chauffer ledit boîtier (2) afin de refroidir ou chauffer la matière alimentaire contenue dans ladite chambre (4), dans laquelle ledit boîtier (2) comprend au moins un corps (20), dans lequel au moins une partie de ladite chambre (4) est obtenue et qui définit un côté extérieur dudit boîtier, de préférence une base (2B) dudit boîtier, et dans laquelle ledit système de conditionnement thermique comprend une plaque de conditionnement thermique (40), qui est couplée audit côté dudit boîtier (2) dans une condition d'échange thermique, principalement par conduction,
dans laquelle ladite plaque de conditionnement thermique (40) comprend une surface de contact (41) mise en contact avec ledit côté dudit boîtier (2),
dans laquelle ledit système de conditionnement thermique comprend un circuit de conditionnement thermique à pompe à chaleur (60), dans lequel circule un fluide de conditionnement thermique et qui inclut une unité de conditionnement thermique qui peut être actionnée sélectivement pour chauffer ou refroidir ledit fluide de conditionnement thermique, et dans laquelle ledit circuit (60) comprend un tube (64) en matériau thermiquement conducteur, dans lequel ledit fluide circule et qui est couplé à ladite plaque de conditionnement thermique (40) dans une condition d'échange thermique avec ladite plaque, principalement par conduction, ou
ledit système de conditionnement thermique comprend un circuit frigorifique, dans lequel circule un fluide de conditionnement thermique et qui inclut une unité de refroidissement pour refroidir ledit fluide de conditionnement thermique, et dans laquelle ledit circuit (60) comprend un tube (64) en matériau thermiquement conducteur, dans lequel ledit fluide circule et qui est couplé à ladite plaque de conditionnement thermique (40) dans une condition d'échange thermique avec ladite plaque, principalement par conduction,
**caractérisée en ce que**, sur son côté opposé à ladite surface de contact, ladite plaque (40) présente un siège en retrait (42), à l'intérieur duquel ledit tube (64) est reçu et qui suit tout le développement de la portion dudit tube (64) en contact avec ladite plaque (40) .

2. Machine selon la revendication 1, dans laquelle ledit système de conditionnement thermique comprend en outre une unité de chauffage pour chauffer ladite plaque (40), de préférence un élément chauffant.

3. Machine selon l'une quelconque des revendications précédentes, dans laquelle ladite plaque (40) est en matériau thermiquement conducteur, de préférence en aluminium.

4. Machine selon l'une quelconque des revendications précédentes, dans laquelle ledit boîtier (2) ou ledit corps (20) dudit boîtier (2) est en matériau thermiquement conducteur, de préférence en aluminium.

5. Machine selon l'une quelconque des revendications précédentes, comprenant une interface utilisateur (80) au moyen de laquelle un opérateur peut sélectionner un mode de fonctionnement dudit système de conditionnement thermique, et une unité de commande (90) configurée pour commander le système de conditionnement thermique selon le mode de fonctionnement sélectionné par l'opérateur.
